# EUROPÄISCHE PATENTSCHRIFT

(11) **EP 2 912 740 B1**
(45) Veröffentlichungstag und Bekanntmachung des Hinweises auf die Patenterteilung: **20.02.2019**
(21) Anmeldenummer: 13788910.1
(22) Anmeldetag: 23.10.2013
(51) Int. Cl.: H02M 1/32, H02M 3/335, H02H 11/00, H02H 7/12

(54) **GLEICHSPANNUNGSWANDLER**
DC CONVERTER
CONVERTISSEUR CONTINU-CONTINU

(30) Priorität: 23.10.2012 DE 102012219365
(43) Veröffentlichungstag der Anmeldung: 02.09.2015
(73) Patentinhaber: Schmidhauser AG, 8590 Romanshorn (CH)
(72) Erfinder: SCHEKULIN, Dirk, CH-9056 Gais (CH); GROSS, Silvia, CH-8590 Romanshorn (CH); HÄRTSCH, Chris, CH-9230 Flawil (CH); BISIG, Thomas, CH-8590 Romanshorn (CH); ITTEN, Alex, CH-8590 Romanshorn (CH); CAVIN, Pierre, CH-8570 Weinfelden (CH)
(74) Vertreter: Patentanwälte Ruff, Wilhelm, Beier, Dauster & Partner mbB
(86) Internationale Anmeldenummer: PCT/EP2013/072147
(87) Internationale Veröffentlichungsnummer: WO 2014/064142

(56) Entgegenhaltungen:
- DE-U1- 20 221 373
- DE-U1-202010 016 526
- US-A- 5 684 683
- US-A- 6 069 798
- Maxim Integrated: "Reverse Battery Charger Protection", , 16 February 2011 (2011-02-16), XP055453894, Retrieved from the Internet: URL:https://pdfserv.maximintegrated.com/en /an/AN4572.pdf [retrieved on 2018-02-23]
- Anonymous: "reverse polarity protection curcuit for 12 Volt", , 11 November 2008 (2008-11-11), XP055453895, Retrieved from the Internet: URL:http://www.edaboard.com/showthread.php ?t=137840 [retrieved on 2018-02-23]

## Beschreibung

Es sind verschiedene Topologien für Gleichspannungswandler (auch als Gleichstromsteller bezeichnet) für hohe Ausgangsströme bekannt. Häufig verwendet werden Vollbrückenschaltungen mit ausgangsseitig aufgeteilter Wicklung oder Stromverdoppler-Schaltung (current doubler).

Bei Verwendung von Zwischenkreisspannungen bis 850 V werden vorzugsweise IGBTs (Insulated-gate bipolar Transistor) mit 1200 V Spannungsfestigkeit verwendet, was zu einer deutlichen Beschränkung der Schaltfrequenz nach oben führt, wodurch relativ große induktive Bauelemente erforderlich werden.

Aus der DE 202 21 373 U1 ist eine Schaltung bekannt, bei der zwei asymmetrische Halbbrücken auf eine aufgeteilte Primärwicklung eines Transformators arbeiten. Dies ermöglicht die Verwendung von MOSFETs als Schaltelemente, wodurch die Schaltfrequenz erheblich gesteigert werden kann. Ausgangsseitig arbeitet diese Schaltung mit einer Stromverdoppler-Schaltung. Zur Beherrschung von Rückstromeffekten der Dioden sind zusätzliche Sättigungsdrosseln erforderlich.

Bei der in der DE 202 21 373 U1 gezeigten Schaltung führt ein Verpolen der Ausgangsklemmen beispielsweise beim Anschließen einer Batterie zwangsläufig zu hohen Strömen und somit zur Zerstörung der Gleichrichterdioden. Aufgrund der Stromverdoppler-Schaltung ergibt sich weiter eine hohe Strombelastung der Wicklungen des Transformators.

Der Erfindung liegt die Aufgabe zugrunde, einen Gleichspannungswandler zur Verfügung zu stellen, der die Verwendung vom MOSFETs als Schaltelemente ermöglicht und gleichzeitig einen sicheren Verpolungsschutz gewährleistet und/oder der eine geringe Strombelastungen der Wicklungen des Transformators aufweist.

Die Erfindung löst diese Aufgabe durch einen Gleichspannungswandler nach Anspruch 1.

Der Gleichspannungswandler weist eine erste, insbesondere asymmetrische, Halbbrückenschaltung und eine zweite, insbesondere asymmetrische, Halbbrückenschaltung auf.

Weiter ist mindestens ein, insbesondere galvanisch trennender, Transformator vorgesehen, der mindestens eine Primärwicklung und mindestens eine Sekundärwicklung umfasst. Die erste und die zweite Halbbrückenschaltung sind dazu ausgebildet, eine Wechselspannung an der mindestens einen Primärwicklung zu erzeugen.

Eine Gleichrichterschaltung des Gleichspannungswandlers umfasst einen Ausgangsanschluss, wobei der Ausgangsanschluss einen ersten Ausgangsanschlusspol bzw. eine erste Ausgangsklemme und einen zweiten Ausgangsanschlusspol bzw. eine zweite Ausgangsklemme aufweist, und mindestens ein Gleichrichterelement, wobei die Gleichrichterschaltung dazu ausgebildet ist, eine an der mindestens einen Sekundärwicklung anstehende Spannung gleichzurichten und an dem Ausgangsanschluss gleichgerichtet auszugeben.

Die Gleichrichterschaltung weist einen Verpolungsschutztransistor auf, dessen Kollektor-Emitter-Strecke oder dessen Drain-Source-Strecke zwischen einen Anschluss des mindestens einen Gleichrichterelements und den ersten oder den zweiten Ausgangsanschlusspol des Ausgangsanschlusses eingeschleift ist.

Der Verpolungsschutztransistor gewährleistet einen sicheren Verpolungsschutz, so dass beispielsweise ein Verpolen der Ausgangsanschlusspole beim Anschließen einer Batterie nicht zu einer Zerstörung der Gleichrichterelemente führt.

Der Gleichspannungswandler kann genau einen Transformator aufweisen, wobei der Transformator genau zwei Primärwicklungen und genau zwei Sekundärwicklungen umfasst.

Die erste Halbbrückenschaltung kann dazu ausgebildet sein, eine Wechselspannung an der ersten Primärwicklung zu erzeugen, und die zweite Halbbrückenschaltung kann dazu ausgebildet sein, eine Wechselspannung an der zweiten Primärwicklung zu erzeugen.

Die Gleichrichterschaltung kann genau zwei Gleichrichterelemente in Form einer ersten Diode und einer zweiten Diode aufweisen, wobei ein erster Anschluss der ersten Sekundärwicklung mit der Anode der ersten Diode elektrisch verbunden ist und zwischen die Kathode der ersten Diode und den ersten Ausgangsanschlusspol des Ausgangsanschlusses die Drain-Source-Strecke des MOSFET-Verpolungsschutztransistors und eine Drossel (in beliebiger Reihenfolge) eingeschleift sind.

Ein erster Anschluss der zweiten Sekundärwicklung kann mit der Anode der zweiten Diode elektrisch verbunden sein, die Kathode der ersten Diode und die Kathode der zweiten Diode können elektrisch verbunden sein, und der zweite Anschluss der ersten Sekundärwicklung, der zweite Anschluss der zweiten Sekundärwicklung und der zweite Ausgangsanschlusspol des Ausgangsanschlusses können elektrisch verbunden sein.

Der Gleichspannungswandler kann genau zwei, beispielsweise magnetisch gekoppelte, Transformatoren aufweisen, wobei die beiden Transformatoren jeweils genau eine Primärwicklung und genau eine Sekundärwicklung umfassen. Die erste Halbbrückenschaltung kann dazu ausgebildet sein, eine Wechselspannung an der Primärwicklung des ersten Transformators zu erzeugen, und die zweite Halbbrückenschaltung kann dazu ausgebildet sein, eine Wechselspannung an der Primärwicklung des zweiten Transformators zu erzeugen. Die Gleichrichterschaltung kann ein erstes Paar von Gleichrichterelementen in Form einer ersten Diode und einer zweiten Diode aufweisen und ein zweites Paar von Gleichrichterelementen in Form einer dritten Diode und einer vierten Diode aufweisen. Ein erster Anschluss der Sekundärwicklung des ersten Transformators kann mit der Anode der ersten Diode elektrisch verbunden sein, ein erster Anschluss der Sekundärwicklung des zweiten Transformators kann mit der Anode der dritten Diode elektrisch verbunden sein, die Kathoden der ersten bis vierten Diode können elektrisch verbunden sein und zwischen die Kathoden der ersten bis vierten Diode und den ersten Ausgangsanschlusspol des Ausgangsanschlusses können die Drain-Source-Strecke des MOSFET-Verpolungsschutztransistors und eine Drossel (in beliebiger Reihenfolge) eingeschleift sein.

Ein zweiter Anschluss der Sekundärwicklung des ersten Transformators, ein zweiter Anschluss der Sekundärwicklung des zweiten Transformators, die Anoden der zweiten Diode und der vierten Diode und der zweite Ausgangsanschlusspol des Ausgangsanschlusses können elektrisch verbunden sein.

Der Gleichspannungswandler kann genau einen Transformator aufweisen, wobei der Transformator genau zwei Primärwicklungen und genau eine Sekundärwicklungen aufweist. Die erste Halbbrückenschaltung kann dazu ausgebildet sein, eine Wechselspannung an der ersten Primärwicklung zu erzeugen, und die zweite Halbbrückenschaltung kann dazu ausgebildet sein, eine Wechselspannung an der zweiten Primärwicklung zu erzeugen. Die Gleichrichterschaltung kann zwei Gleichrichterelemente in Form einer ersten Diode und einer zweiten Diode aufweisen, wobei ein erster Anschluss der Sekundärwicklung mit der Kathode der ersten Diode elektrisch verbunden ist, die Anode der ersten Diode mit der Anode der zweiten Diode elektrisch verbunden ist, die Kathode der zweiten Diode mit einem zweiten Anschluss der Sekundärwicklung elektrisch verbunden ist und zwischen die Anoden der ersten und zweiten Diode und den zweiten Ausgangsanschlusspol des Ausgangsanschlusses die Drain-Source-Strecke des Verpolungsschutztransistors eingeschleift ist.

Zwischen den ersten Anschluss der Sekundärwicklung und den ersten Ausgangsanschlusspol des Ausgangsanschlusses kann eine erste Drossel eingeschleift sein und zwischen den zweiten Anschluss der Sekundärwicklung und den ersten Ausgangsanschlusspol des Ausgangsanschlusses kann eine zweite Drossel eingeschleift sein.

Als jeweilige Schaltmittel in der ersten und der zweiten Halbbrückenschaltungen können MOSFETs (Metall-Oxid-Halbleiter-Feldeffekttransistoren) verwendet werden.

Sämtliche Gleichrichterelemente und der Verpolungsschutztransistor können in ein Leistungsmodul integriert sein.

Die Erfindung wird nachfolgend unter Bezugnahme auf die Zeichnungen beschrieben. Hierbei zeigt schematisch:
Fig. 1 einen Gleichspannungswandler in Form eines Gegentaktflusswandlers mit zwei asymmetrischen Halbbrücken, die in Reihe oder parallel geschaltet sind, einem Transformator mit 2 Primär- und 2 Sekundärwicklungen und ausgangsseitigem Verpolungsschutz,
Fig. 2 einen Gleichspannungswandler in Form eines Gegentaktflusswandlers mit zwei asymmetrischen Halbbrücken, die in Reihe oder parallel geschaltet sind, zwei Transformatoren (optional magnetisch gekoppelt) mit jeweils einer einzelnen Primär- und Sekundärwicklung und ausgangsseitigem Verpolungsschutz,
Fig. 3 einen Gleichspannungswandler in Form eines Gegentaktflusswandlers mit zwei asymmetrischen Halbbrücken, die in Reihe oder parallel geschaltet sind, einem Transformator mit 2 Primär- und einer Sekundärwicklung, einer Stromverdoppler-Schaltung und ausgangsseitigem Verpolungsschutz und
Fig. 4 einen auf dem in Fig. 1 gezeigten Gleichspannungswandler basierenden Gleichspannungswandler mit Synchrongleichrichtung auf der Sekundärseite/Niederspannungsseite.

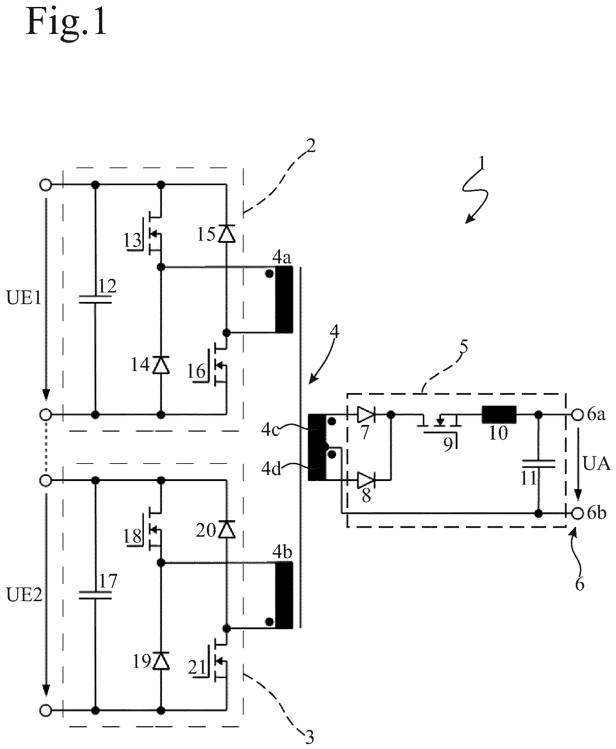

Fig. 1 zeigt einen Gleichspannungswandler 1 mit einer ersten asymmetrischen Halbbrückenschaltung 2, einer zweiten asymmetrischen Halbbrückenschaltung 3, einem Transformator 4 mit zwei Primärwicklungen 4a, 4b und zwei Sekundärwicklungen 4c, 4d und einer Gleichrichterschaltung 5 mit Verpolungsschutz.

Die erste Halbbrückenschaltung 2 ist dazu ausgebildet, eine Wechselspannung an der ersten Primärwicklung 4a zu erzeugen und die zweite Halbbrückenschaltung 3 ist dazu ausgebildet, eine Wechselspannung an der zweiten Primärwicklung 4b zu erzeugen.

Die erste Halbbrückenschaltung 2 umfasst einen Eingangskondensator 12, der eine Eingangsgleichspannung UE1 puffert, die an Eingangsanschlüssen der Halbbrückenschaltung 2 angelegt ist. Zwischen die Eingangsanschlüsse sind ein erster MOSFET 13 und eine erste Diode 14 in Reihe eingeschleift. Zwischen die Eingangsanschlüsse sind weiter eine zweite Diode 15 und ein zweiter MOSFET 16 in Reihe eingeschleift. Die erste Primärwicklung 4a ist zwischen einen Verbindungsknoten des ersten MOSFET 13 und der Kathode der ersten Diode 14 und einen Verbindungsknoten der Anode der zweiten Diode 15 und des zweiten MOSFET 16 eingeschleift.

Die zweite Halbrückenschaltung 3 ist topologisch entsprechend aufgebaut und umfasst einen Eingangskondensator 17, der eine Eingangsgleichspannung UE2 puffert (wobei UE1 und UE2 identisch oder verschieden sein können), die an Eingangsanschlüssen der Halbbrückenschaltung 3 angelegt ist. Zwischen die Eingangsanschlüsse sind ein dritter MOSFET 18 und eine dritte Diode 19 in Reihe eingeschleift. Zwischen die Eingangsanschlüsse sind weiter eine vierte Diode 20 und ein vierter MOSFET 21 in Reihe eingeschleift. Die zweite Primärwicklung 4b ist zwischen einen Verbindungsknoten des dritten MOSFET 18 und der Kathode der dritten Diode 19 und einen Verbindungsknoten der Anode der vierten Diode 20 und des vierten MOSFET 21 eingeschleift.

Die Gleichrichterschaltung 5 dient dazu, an den Sekundärwicklungen 4c und 4d anstehende Wechselspannungen gleichzurichten und als gleichgerichtete Ausgangsgleichspannung UA an einem Ausgangsanschluss 6 mit einem ersten und einem zweiten Ausgangsanschlusspol 6a, 6b auszugeben. Ein am Ausgangsanschlusspol 6a ausgegebenes Potential kann größer sein als ein am Ausgangsanschlusspol 6b ausgegebenes Potential.

Zur Spannungsgleichrichtung weist die die Gleichrichterschaltung 5 zwei Gleichrichterelemente in Form einer ersten Diode 7 und einer zweiten Diode 8 auf, wobei ein erster Anschluss der ersten Sekundärwicklung 4c mit der Anode der ersten Diode 7 elektrisch verbunden ist, ein erster Anschluss der zweiten Sekundärwicklung 4d mit der Anode der zweiten Diode 8 elektrisch verbunden ist, die Kathode der ersten Diode 7 und die Kathode der zweiten Diode 8 elektrisch verbunden sind und der zweite Anschluss der ersten Sekundärwicklung 4c, der zweite Anschluss der zweiten Sekundärwicklung 4d (wobei die zweiten Anschlüsse der Sekundärwicklungen 4c und 4d eine gemeinsame Trafomittenanzapfung bilden können) und der zweite Ausgangsanschlusspol 6b des Ausgangsanschlusses 6 elektrisch verbunden sind.

Zwischen die Kathoden der Dioden 7 und 8 und den ersten Ausgangsanschlusspol 6a des Ausgangsanschlusses 6 sind die Drain-Source-Strecke eines MOSFET-Verpolungsschutztransistors 9 und eine Drossel 10 in beliebiger Reihenfolge eingeschleift.

Der MOSFET-Verpolschutztransistor 9 ist derart zu verschalten, dass er eine verpolte Spannung wirksam sperrt. Bei Verwendung von N-Kanal MOSFET-Verpolschutztransistoren bedeutet dies, dass der Source-Anschluss in Richtung der Plusklemme 6a zeigt und der Drain-Anschluss in Richtung der Gleichrichterelemente bzw. Gleichrichterdioden 7 und 8 zeigt.

Es versteht sich, dass der MOSFET-Verpolschutztransistor 9 auch "durchgeschoben" und in der Minusleitung angeordnet sein kann. Für diesen Fall zeigt der Drain-Anschluss in Richtung Minusklemme 6b und der Source-Anschluss zeigt in Richtung der Trafomittenanzapfung.

Eine positive Spannung, beispielsweise 12 V, zwischen Gate-Anschluss und Source-Anschluss schaltet den MOSFET-Verpolschutztransistor 9 ein und eine Spannung von 0 V zwischen Gate-Anschluss und Source-Anschluss bewirkt ein Sperren des MOSFET-Verpolschutztransistors 9, d.h. die Spannung am Gate-Anschluss ist je nach Verschaltung des MOSFET-Verpolschutztransistors 9 geeignet zu wählen.

Ein Kondensator 11 dient zur Pufferung der Ausgangsgleichspannung UA.

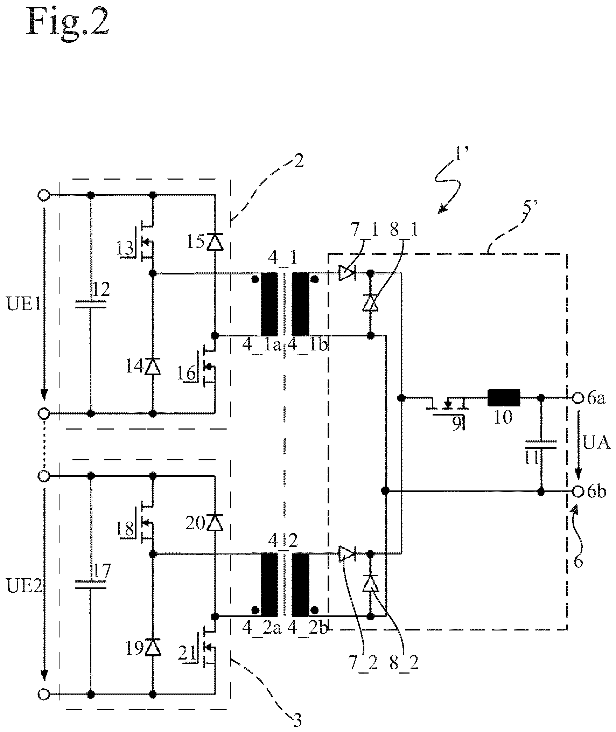

Fig. 2 zeigt einen Gleichspannungswandler 1' in Form eines Gegentaktflusswandlers mit zwei optional magnetisch gekoppelten Transformatoren 4_1 und 4_2 mit jeweils einer einzelnen Primärwicklung 4_1a bzw. 4_2a und jeweils einer einzelnen Sekundärwicklung 4_1b bzw. 4_2b und ausgangsseitigem Verpolungsschutz.

Die Halbbrückenschaltungen 2 und 3 entsprechen denen aus Fig. 1.

Eine Gleichrichterschaltung 5' umfasst ein erstes Paar von Gleichrichterelementen in Form einer ersten Diode 7_1 und einer zweiten Diode 8_1 und ein zweites Paar von Gleichrichterelementen in Form einer dritten Diode 7_2 und einer vierten Diode 8_2.

Ein erster Anschluss der Sekundärwicklung 4_1b des ersten Transformators 4_1 ist mit der Anode der ersten Diode 7_1 elektrisch verbunden, ein erster Anschluss der Sekundärwicklung 4_2b des zweiten Transformators 4_2 ist mit der Anode der dritten Diode 7_2 elektrisch verbunden, die Kathoden der ersten bis vierten Diode 7_1, 7_2, 8_1, 8_2 sind elektrisch verbunden und zwischen die Kathoden der ersten bis vierten Diode 7_1, 7_2, 8_1, 8_2 und den ersten Ausgangsanschlusspol 6a des Ausgangsanschlusses 6 sind die Drain-Source-Strecke des MOSFET-Verpolungsschutztransistors 9 und die Drossel 10 in beliebiger Reihenfolge eingeschleift.

Ein zweiter Anschluss der Sekundärwicklung 4_1b des ersten Transformators 4_1, ein zweiter Anschluss der Sekundärwicklung 4_2b des zweiten Transformators 4_2, die Anoden der zweiten Diode 8_1 und der vierten Diode 8_2 und der zweite Ausgangsanschlusspol 6b des Ausgangsanschlusses 6 sind elektrisch verbunden.

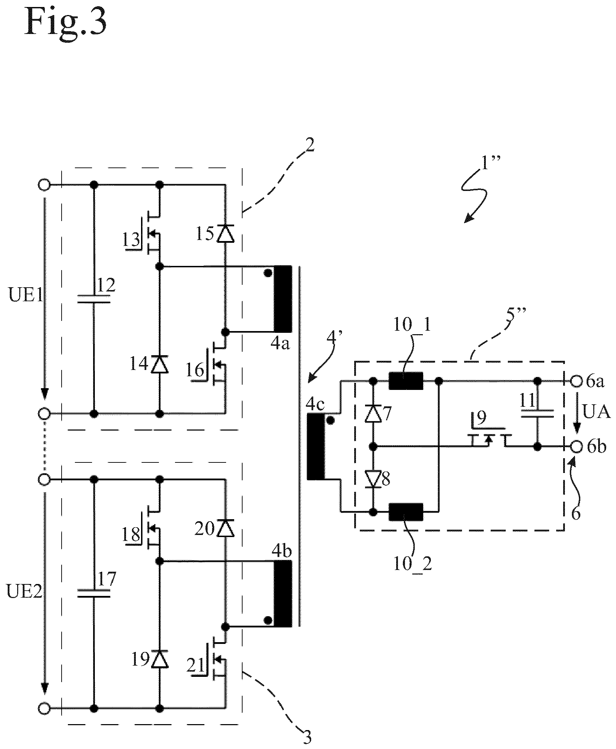

Fig. 3 zeigt einen Gleichspannungswandler 1" in Form eines Gegentaktflusswandlers mit einem Transformator 4' mit 2 Primärwicklungen 4a, 4b und einer Sekundärwicklung 4c, einer Stromverdoppler-Schaltung und ausgangsseitigem Verpolungsschutz.

Eine Gleichrichterschaltung 5" weist zwei Gleichrichterelemente in Form einer ersten Diode 7 und einer zweiten Diode 8 auf, wobei ein erster Anschluss der Sekundärwicklung 4c mit der Kathode der ersten Diode 7 elektrisch verbunden ist, die Anode der ersten Diode 7 mit der Anode der zweiten Diode 8 elektrisch verbunden ist, die Kathode der zweiten Diode 8 mit einem zweiten Anschluss der Sekundärwicklung 4c elektrisch verbunden ist und zwischen die Anoden der ersten und zweiten Diode 7, 8 und den zweiten Ausgangsanschlusspol 6b des Ausgangsanschlusses 6 die Drain-Source-Strecke des MOSFET-Verpolungsschutztransistors 9 eingeschleift ist.

Zwischen den ersten Anschluss der Sekundärwicklung 4c und den ersten Ausgangsanschlusspol 6a des Ausgangsanschlusses 6 ist eine erste Drossel 10_1 eingeschleift und zwischen den zweiten Anschluss der Sekundärwicklung 4c und den ersten Ausgangsanschlusspol 6a des Ausgangsanschlusses ist eine zweite Drossel 10_2 eingeschleift.

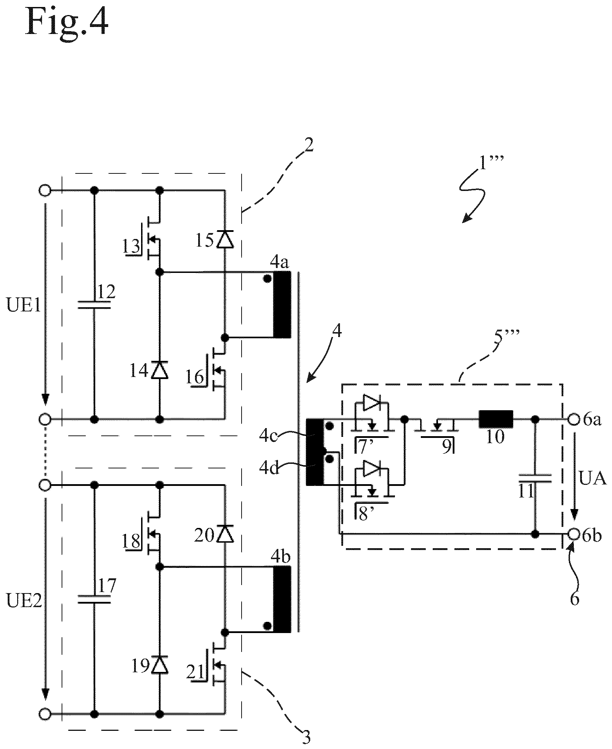

Fig. 4 zeigt einen auf dem in Fig. 1 gezeigten Gleichspannungswandler 1 basierenden Gleichspannungswandler 1''' mit Synchrongleichrichtung auf der Sekundärseite/Niederspannungsseite. Hierzu sind anstelle der Dioden 7 und 8 ansteuerbare Schaltmittel, beispielsweise Transistoren 7' und 8', vorgesehen.

Es versteht sich, dass zur Ansteuerung der Schaltmittel in sämtlichen Ausführungsformen eine geeignete, nicht gezeigte Ansteuervorrichtung vorgesehen ist.

Die Erfindung basiert zunächst auf einer Reihen- oder Parallelschaltung von asymmetrischen Halbbrückenwandlern. Damit können schnell schaltende 600V-MOSFETs eingesetzt werden, sodass eine Schaltfrequenz auf über 100 kHz gesteigert werden kann.

Im Ausgangskreis des potentialtrennenden Gleichstromstellers mit integriertem Verpolungsschutz ist ein Leistungsanschluss des Verpolungsschutz-Transistors mit den Anoden- oder Kathodenanschlüssen der Gleichrichterdioden direkt verbunden.

Sekundärseitig wird bevorzugt nicht mit einer Stromverdoppler-Anordnung gearbeitet, sondern mit einer aufgeteilten Wicklung und Gegentaktgleichrichtung. Das hat konstruktive Vorteile beim Transformatordesign und hat eine geringere Strombelastung der Wicklungen zur Folge.

Nach den Gleichrichterdioden kann unmittelbar ein MOSFET 9 als Verpolungsschutz in Reihenschaltung mit der Glättungsdrossel 10 folgen. Dies erscheint zunächst ungünstig, da die Stromwelligkeit durch den Transistor 9 zusätzliche Verluste produzieren kann. In Hinblick auf eine Realisierung kann aufgrund der hohen Ströme eine möglichst kurze massive Verschienung verwendet werden.

Vom Verpolungsschutz-Transistor 9 werden beispielsweise transiente Spannungsspitzen aus einem Bordnetz ferngehalten, was eine Erhöhung der Zuverlässigkeit erwarten lässt.

## Patentansprüche

1. Gleichspannungswandler (1; 1'''), aufweisend:
- eine erste, insbesondere asymmetrische, Halbbrückenschaltung (2),
- eine zweite, insbesondere asymmetrische, Halbbrückenschaltung (3),
- einen Transformator (4), wobei der Transformator (4) genau zwei Primärwicklungen (4a, 4b) und zwei Sekundärwicklungen (4c, 4d) aufweist, wobei die erste Halbbrückenschaltung (2) dazu ausgebildet ist, eine Wechselspannung an der ersten Primärwicklung (4a) zu erzeugen, und die zweite Halbbrückenschaltung (3) dazu ausgebildet ist, eine Wechselspannung an der zweiten Primärwicklung (4b) zu erzeugen, und
- eine Gleichrichterschaltung (5; 5''') aufweisend
- einen Ausgangsanschluss (6), wobei der Ausgangsanschluss (6) einen ersten Ausgangsanschlusspol (6a) und einen zweiten Ausgangsanschlusspol (6b) aufweist, und
- zwei Gleichrichterelemente in Form einer ersten Diode (7) und einer zweiten Diode (8),
- wobei die Gleichrichterschaltung (5; 5''') dazu ausgebildet ist, an den beiden Sekundärwicklungen (4c, 4d) anstehende Spannungen gleichzurichten und an dem Ausgangsanschluss (6) auszugeben, und
- wobei die Gleichrichterschaltung (5; 5''') einen Verpolungsschutztransistor (9) aufweist, dessen Drain-Source-Strecke direkt mit jeweiligen Kathodenanschlüssen der ersten Diode (7) und der zweiten Diode (8) elektrisch verbunden ist und dessen Drain-Source-Strecke zwischen die jeweiligen Kathodenanschlüsse der ersten Diode (7) und der zweiten Diode (8) und den ersten oder den zweiten Ausgangsanschlusspol (6a, 6b) des Ausgangsanschlusses (6) eingeschleift ist,
- wobei ein erster Anschluss der ersten Sekundärwicklung (4c) mit der Anode der ersten Diode (7) elektrisch verbunden ist und zwischen die Kathode der ersten Diode (7) und den ersten Ausgangsanschlusspol (6a) des Ausgangsanschlusses (6) die Drain-Source-Strecke des Verpolungsschutztransistors (9) und eine Drossel (10) eingeschleift sind,
- wobei ein erster Anschluss der zweiten Sekundärwicklung (4d) mit der Anode der zweiten Diode (8) elektrisch verbunden ist,
- wobei die Kathode der ersten Diode (7) und die Kathode der zweiten Diode (8) elektrisch verbunden sind,
- wobei der zweite Anschluss der ersten Sekundärwicklung (4c), der zweite Anschluss der zweiten Sekundärwicklung (4d) und der zweite Ausgangsanschlusspol (6b) des Ausgangsanschlusses (6) elektrisch verbunden sind, und
- wobei die Gleichrichterelemente (7, 7'; 8, 8') und der Verpolungsschutztransistor (9) in ein Leistungsmodul integriert sind.

2. Gleichspannungswandler (1, 1''') nach Anspruch 1, **dadurch gekennzeichnet, dass** als Schaltmittel in der ersten und der zweiten Halbbrückenschaltung (2, 3) MOSFETs verwendet werden.

## Claims

1. Direct current converter (1; 1'''), comprising:
- a first, in particular asymmetrical, half-bridge circuit (2),
- a second, in particular asymmetrical, half-bridge circuit (3),
- a transformer (4), wherein the transformer (4) has exactly two primary windings (4a, 4b) and two secondary windings (4c, 4d), wherein the first half-bridge circuit (2) is configured to generate an alternating (AC) voltage at the first primary winding (4a), and the second half-bridge circuit (3) is configured to generate an AC voltage at the second primary winding (4b), and
- a rectifier circuit (5; 5''') comprising
- an output terminal (6), wherein the output terminal (6) comprises a first output terminal pole (6a) and a second output terminal pole (6b), and
- two rectifier elements in the form of a first diode (7) and a second diode (8),
- wherein the rectifier circuit (5; 5''') is configured to rectify voltages present at the two secondary windings (4c, 4d) and to output them at the output terminal (6), and
- wherein the rectifier circuit (5; 5''') comprises a polarity reversal protection transistor (9), the drain-source path thereof being electrically connected directly to the respective cathode terminals of the first diode (7) and the second diode (8), and the drain-source path thereof being connected between the respective cathode terminals of the first diode (7) and the second diode (8) and the first or the second output terminal pole (6a, 6b) of the output terminal (6),
- wherein a first terminal of the first secondary winding (4c) is electrically connected to the anode of the first diode (7) and the drain-source path of the polarity reversal protection transistor (9) and an inductor (10) are connected between the cathode of the first diode (7) and the first output terminal pole (6a) of the output terminal (6),
- wherein a first terminal of the second secondary winding (4d) is electrically connected to the anode of the second diode (8),
- wherein the cathode of the first diode (7) and the cathode of the second diode (8) are electrically connected,
- wherein the second terminal of the first secondary winding (4c), the second terminal of the second secondary winding (4d) and the second output terminal pole (6b) of the output terminal (6) are electrically connected, and
- wherein the rectifier elements (7, 7'; 8, 8') and the polarity reversal protection transistor (9) are integrated into a power module.

2. Direct current converter (1; 1''') according to claim 1, **characterized in that** MOSFETs are used as switching means in the first and the second half-bridge circuits (2, 3).

## Revendications

1. Convertisseur de tension continue (1; 1'''), comprenant :
- un premier circuit en demi-pont (2), notamment asymétrique,
- un deuxième circuit en demi-pont (3), notamment asymétrique,
- un transformateur (4), le transformateur (4) possédant exactement deux enroulements primaires (4a, 4b) et deux enroulements secondaires (4c, 4d), le premier circuit en demi-pont (2) étant configuré pour générer une tension alternative au niveau du premier enroulement primaire (4a) et le deuxième circuit en demi-pont (3) étant configuré pour générer une tension alternative au niveau du deuxième enroulement primaire (4b) et
- un circuit redresseur (5 ; 5''') comprenant
- une borne de sortie (6), la borne de sortie (6) possédant un premier pôle de borne de sortie (6a) et un deuxième pôle de borne de sortie (6b), et
- deux éléments redresseurs sous la forme d'une première diode (7) et d'une deuxième diode (8),
- le circuit redresseur (5; 5''') étant configuré pour redresser les tensions produites au niveau des deux enroulements secondaires (4c, 4d) et les délivrer au niveau de la borne de sortie (6) et
- le circuit redresseur (5 ; 5''') possédant un transistor de protection contre les inversions de polarité (9) dont la branche drain-source est reliée électriquement directement avec les bornes de cathode respectives de la première diode (7) et de la deuxième diode (8) et dont la branche drain-source est insérée entre les bornes de cathode respectives de la première diode (7) et de la deuxième diode (8) et le premier ou le deuxième pôle de borne de sortie (6a, 6b) de la borne de sortie (6),
- une première borne du premier enroulement secondaire (4c) étant reliée électriquement à l'anode de la première diode (7) et la branche drain-source du transistor de protection contre les inversions de polarité (9) et une bobine (10) étant insérées entre la cathode de la première diode (7) et le premier pôle de borne de sortie (6a) de la borne de sortie (6),
- une première borne du deuxième enroulement secondaire (4d) étant reliée électriquement à l'anode de la deuxième diode (8),
- la cathode de la première diode (7) et la cathode de la deuxième diode (8) étant reliées électriquement,
- la deuxième borne du premier enroulement secondaire (4c), la deuxième borne du deuxième enroulement secondaire (4d) et le deuxième pôle de borne de sortie (6b) de la borne de sortie (6) étant reliés électriquement et
- les éléments redresseurs (7, 7' ; 8, 8') et le transistor de protection contre les inversions de polarité (9) étant intégrés dans un module de puissance.

2. Convertisseur de tension continue (1, 1''') selon la revendication 1, **caractérisé en ce que** les moyens de commutation utilisés dans le premier et le deuxième circuit en demi-pont (2, 3) sont des MOSFET.
